# EUROPEAN PATENT SPECIFICATION

(11) **EP 0 500 129 B1**
(45) Date of publication and mention of the grant of the patent: **31.07.1996**
(21) Application number: 92102966.6
(22) Date of filing: 21.02.1992
(51) Int. Cl.: C08J 5/18, C08J 3/11, C08G 64/08, C08G 77/448

(54) **Polycarbonate resin solution for film formation by casting**
Polycarbonatharzlösung zur Herstellung von gegossenen Folien
Solution de polycarbonate pour la préparation des film coulés

(30) Priority: 22.02.1991 JP 48616/91; 22.02.1991 JP 48618/91
(43) Date of publication of application: 26.08.1992
(73) Proprietor: MITSUBISHI GAS CHEMICAL COMPANY, INC., Chiyoda-ku, Tokyo (JP)
(72) Inventor: Kanayama, Satoshi, c/o Mitsubishi Gas Chemical, Toyonaka-shi, Osaka (JP); Ogawa, Noriyoshi, c/o Mitsubishi Gas Chemical, Toyonaka-shi, Osaka (JP); Kawahigashi, Teruo, c/o Mitsubishi Gas Chemical, Toyonaka-shi, Osaka (JP); Okigawa, Toshio, c/o Mitsubishi Gas Chemical, Toyonaka-shi, Osaka (JP)
(74) Representative: Hansen, Bernd, Dr. Dipl.-Chem.

(56) References cited:
- WO-A-91/00885
- DE-A- 1 570 703
- DE-A- 2 701 173
- GB-A- 1 382 365

## Description

### FIELD OF THE INVENTION

The present invention relates to a polycarbonate resin solution for use in film formation by casting. More particularly, this invention relates to a polycarbonate resin solution having excellent suitability for film formation by casting due to the polycarbonate resin having a specific structure, and also relates to a process for producing the polycarbonate resin solution.

### BACKGROUND OF THE INVENTION

It is well known that in the cast-film process, a film is produced by casting a resin solution onto the surface of a drum or belt to form a wet film on the surface and removing the solvent from the wet film by hot-air drying, and that a roll, plate, or other various parts are dipped into a resin solution to coat or line the surface. US-A-3 296 478 discloses the preparation of a thin polycarbonate film by solution casting a bisphenol A polycarbonate. However, polycarbonate resin solutions for such uses generally begin to become milky in 3 to 4 days when allowed to stand. It has therefore been necessary to use polycarbonate resin solutions having low resin concentrations or to redissolve the precipitate or otherwise treat the milky resin solution before use, resulting in a disadvantage of poor production efficiency in film formation by casting. Furthermore, films obtained from conventional polycarbonate resin solutions have been unsatisfactory in, for example, that their mechanical strength is so low that they tend to develop stress cracks.

### SUMMARY OF THE INVENTION

An object of the present invention is to overcome these problems by using a specific polycarbonate resin.

The present invention provides a polycarbonate resin solution for use in film formation by casting which comprises an organic solvent and dissolved therein a random copolycarbonate resin having a structural unit represented by the following formula (1), a structural unit represented by the following formula (2), and a structural unit represented by the following formula (3), with the molar ratio of the amount of the structural unit of formula (1) to that of the structural unit of formula (2) being from 35/65 to 65/35 and the content of the structural unit of formula (3) being from 0.1 to 50 % by weight based on the total amount of all the units derived from dihydric phenols, and having a viscosity-average molecular weight of from 15,000 to 100,000: 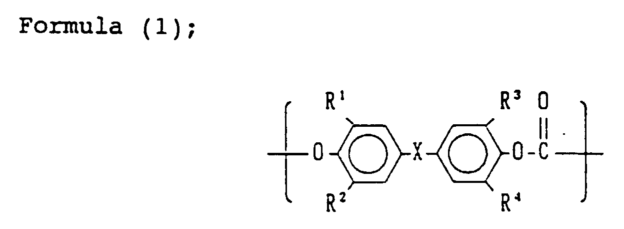 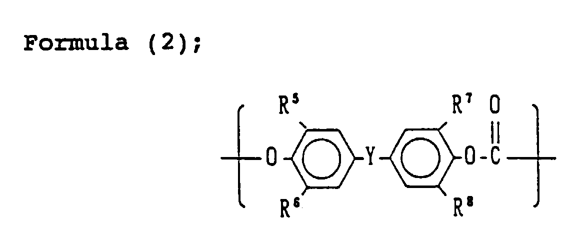 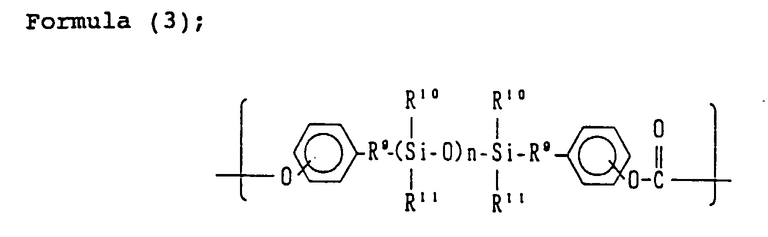 wherein in formulae (1) and (2), R¹ to R⁸ each represents hydrogen atom, a halogen atom, or an alkyl group having from 1 to 4 carbon atoms, X represents a straight-chain, branched, or cyclic alkylidene group having from 1 to 10 carbon atoms, an aryl-substituted alkylidene group, an arylene group, or sulfonyl group, and Y represents oxygen atom or sulfur atom; and in formula (3), R⁹ represents an alkylene or alkylidene group having from 2 to 6 carbon atoms, R¹⁰ and R¹¹ each represents an alkyl group having from 1 to 3 carbon atoms, phenyl group, or a substituted phenyl group, and n is an integer of from 1 to 200.

The present invention further provides a process for producing the above polycarbonate resin solution.

### DETAILED DESCRIPTION OF THE INVENTION

The polycarbonate resin used in the present invention can be obtained by copolymerizing dihydric phenols represented by the following formulae (4), (5), and (6) with phosgene, a carbonic acid ester, or a chloroformate: 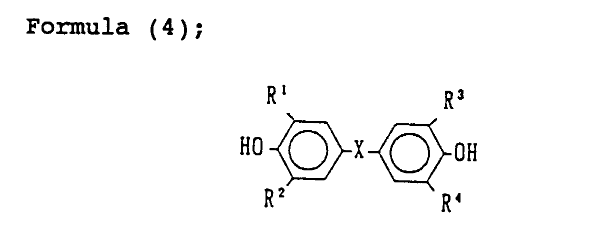 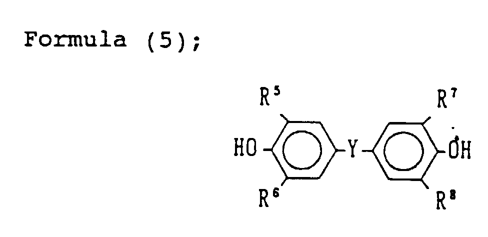 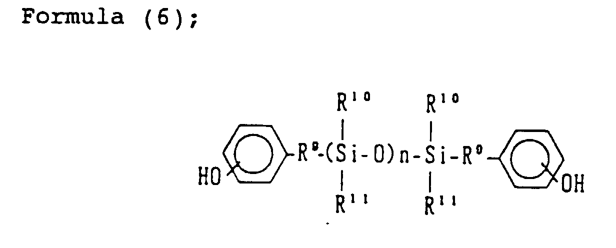 wherein R¹ to R¹¹, X, Y, and n are the same as defined in formulae (1), (2), and (3) described above. This polycarbonate resin has, in the molecule thereof, randomly distributed structural units respectively represented by formulae (1), (2), and (3) described above, and has a viscosity-average molecular weight of from 15,000 to 100,000, preferably from 20,000 to 40,000.

In the above copolymerization, the dihydric phenol of formula (4) and the dihydric phenol of formula (5) are reacted in amounts such that the molar ratio of the amount of (4) to that of (5) is in the range of from 35/65 to 65/35. If the molar ratio thereof is outside the range, solutions of the resulting polycarbonate resin may be turbid even just after preparation thereof or may have poor stability. Due to random copolymerization, the polycarbonate resin produced has a more uniform microscopical distribution as compared to block copolymers and, because of this, the polycarbonate resin is improved not only in optical properties such as solution stability, and the like, but also in stress cracking. If the polycarbonate resin has a viscosity-average molecular weight below 15,000, films obtained therefrom by casting have insufficient strength. On the other hand, molecular weights thereof exceeding 100,000 result in lowered efficiency in film production by casting. Further, use of the dihydric phenol of formula (6) as a third monomer in the above copolymerization serves to enhance the surface hardness and slip properties of the resulting polycarbonate resin and, hence, to further improve the abrasion resistance of the resin. This dihydric phenol of formula (6) is used in an amount of from 0.1 to 50% by weight, preferably from 0.1 to 30% by weight, based on the total amount of all the dihydric phenols used.

Examples of the dihydric phenol compound represented by formula (4) used as a raw material for producing the copolycarbonate resin of the present invention include bis(4-hydroxyphenyl)methane, 1,1-bis(4-hydroxyphenyl)ethane, 2,2-bis(4-hydroxyphenyl)propane (=bisphenol A; BPA), 2,2-bis(4-hydroxyphenyl)butane, 1,1-bis(4-hydroxyphenyl)cyclohexane (=bisphenol Z; BPZ), 2,2-bis (4-hydroxy-3, 5-dimethylphenyl )propane, 2, 2 -bis (4-hydroxy-3,5-dibromophenyl)propane, 2,2-bis(4-hydroxy-3,5-dichlorophenyl)propane, 2,2-bis(4-hydroxy-3-methylphenyl)propane (=dimethylbisphenol A; DMBPA), 2,2-bis(4-hydroxy-3-bromophenyl)propane, 2,2-bis(4-hydroxy-3-chlorophenyl)propane, 1,1-bis(4-hydroxyphenyl)-1-phenyl-ethane, bis(4-hydroxyphenyl)diphenylmethane, bis(4-hydroxy-phenyl) sulfone, and the like. Preferred of these are 2,2-bis(4-hydroxyphenyl)propane, 1,1-bis(4-hydroxyphenyl)-cyclohexane, 1,1-bis(4-hydroxyphenyl)-1-phenylethane, 2,2-bis(4-hydroxy-3-methylphenyl)propane, and bis(4-hydroxy-phenyl) sulfone. From the standpoint of thermal stability, 2,2-bis(4-hydroxyphenyl)propane and 1,1-bis(4-hydroxy-phenyl)cyclohexane are particularly preferred.

Examples of the dihydric phenol compound of formula (5) used as another raw material for producing the copolycarbonate resin of the present invention include bis(4-hydroxyphenyl) ether (=4,4'-dihydroxydiphenyl ether; DHPE), bis(3-methyl-4-hydroxyphenyl) ether (=3,3'-dimethyl-4,4'-dihydroxydiphenyl ether; DMDHPE), bis(3-bromo-4-hydroxyphenyl) ether, bis(3-chloro-4-hydroxyphenyl) ether, bis(3,5-dimethyl-4-hydroxyphenyl) ether, bis(3,5-dibromo-4-hydroxyphenyl) ether, bis(3,5-dichloro-4-hydroxyphenyl) ether, bis(4-hydroxyphenyl)sulfide (TDP), bis(3-methyl-4-hydroxyphenyl)sulfide (DMTDP), bis(3-bromo-4-hydroxyphenyl)sulfide, bis(3-chloro-4-hydroxyphenyl)sulfide, bis(3,5-dimethyl-4-hydroxyphenyl) sulfide, bis(3,5-dibromo-4-hydroxyphenyl)sulfide, bis(3,5-dichloro-4-hydroxyphenyl)sulfide, and the like. Of these, bis(4-hydroxyphenyl) ether and bis(4-hydroxyphenyl) sulfide are preferred.

In combination with the dihydric phenols of formulae (4) and (5), a dihydric phenol represented by formula (6) is used as a further raw material for producing the copolycarbonate resin of the present invention. Symbol n in formula (6) which indicates the number of repeated units is from 1 to 200, preferably from 5 to 100. Examples of R⁹ in formula (6) include ethylene, propylene, isopropylene, butylene, pentylene, and hexylene groups and the like, with -CH₂CH₂CH₂- and -CH¹²-CH₂- (wherein R¹² is linked to the benzene ring-bonded carbon atom and represents hydrogen atom or methyl group) being particularly preferred. The structural unit of formula (3) is introduced into the polycarbonate resin by using the dihydric phenol of formula (6) having a phenolic hydroxyl group at both ends thereof in the same manner as that for ordinary dihydric phenols. This dihydric phenol represented by formula (6) can be easily produced by subjecting a phenol compound having an olefinically unsaturated carbon-carbon bond, preferably vinylphenol, allylphenol, or isopropenylphenol, to hydrosilanation reaction with a polysiloxane having a desired degree of polymerization, n, to bond the phenol compound to both ends of the polysiloxane chain.

For the copolymerization, a chain terminator or molecular weight modifier is usually used, which can be a compound having one phenolic hydroxyl group. Besides ordinarily employed phenol, p-tert-butylphenol, tribromophenol, and the like, examples of the chain terminator or molecular weight modifier include (long-chain alkyl)phenols, aliphatic or aromatic carbonyl chlorides, aliphatic or aromatic carboxylic acids, hydroxybenzoic acid esters, hydroxyphenylalkyl acid esters, alkoxyphenols, and the like. The amount of the chain terminator or molecular weight modifier used is from 100 to 0.5 mol, preferably from 50 to 2 mol, per 100 mol of all the dihydric phenol compounds used. It is, of course, possible to use two or more such compounds in combination as the chain terminator or molecular weight modifier.

A branching agent can also be used in an amount of from 0.01 to 3 mol, preferably from 0.1 to 1.0 mol, per 100 mol of all the dihydric phenol compounds used, to produce a branched polycarbonate. Examples of the branching agent include polyhydroxy compounds such as phloroglucin, 2,6-dimethyl-2,4,6-tris(4-hydroxyphenyl)heptene-3, 4,6-dimethyl-2,4,6-tris(4-hydroxyphenyl)heptene-2, 1,3,5-tris(2-hydroxyphenyl)benzole, 1,1,1-tris(4-hydroxyphenyl)ethane, 2,6-bis(2-hydroxy-5-methylbenzyl)-4-methylphenol, α,α',α''-tris(4-hydroxyphenyl)-1,3,5-triisopropylbenzene and other compounds including 3,3-bis(4-hydroxyaryl)oxindole (=isatinbisphenol), 5-chloroisatin, 5,7-dichloroisatin, 5-bromoisatin, and the like.

If required and necessary, various kinds of known additives or ingredients for use with conventional polycarbonate resins can be added to the polycarbonate resin of the present invention. For example, a reinforcement, filler, stabilizer, ultraviolet absorber, antistatic agent, lubricant, release agent, dye, pigment, flame retardant, and other additives, an elastomer for improving impact resistance, and the like can be added. Particularly preferred examples of the stabilizer are phosphorous acid and phosphites. Examples of the release agent include esters of saturated aliphatic acids with mono- or polyhydric alcohols. Preferred of these are stearyl stearate, behenyl behenate, pentaerythritol tetrastearate, dipentaerythritol hexaoctoate, and the like. Examples of the filler and reinforcement include organic or inorganic materials such as glass powder, glass beads, synthetic or fluorinated mica, zinc oxide, carbon fibers, glass fibers particularly those containing fibers with diameters of 2 µm or less, zinc oxide whiskers, stainless-steel fibers, Kevlar fibers, and the like. Examples of the elastomer include methyl methacrylate-butadiene-styrene copolymer (MBS), methyl methacrylate-aclyonitrile-butadiene-styrene copolymer (MABS), methylmethacrylate-acrylonitrile-styrene copolymer (MAS), and others. Further, an ordinary polycarbonate, a polyester carbonate, a polyarylate, or a similar resin can of course be suitably used according to the use of final films obtained.

As the solvent for use in preparing the polycarbonate resin solution of the present invention, any solvent can he used so long as it dissolves the above-described polycarbonate resin and has appropriate volatility. For example, halogenated solvents such as chlorobenzene and methylene chloride can be used. From the standpoint of safe and hygienic operations during casting, use of a non-halogenated solvent, particularly a hydrocarbon-type solvent such as toluene, xylene, ethylbenzene, or the like, is preferred. The polycarbonate resin concentration in the solution is usually from 1 to 30% by weight, preferably from 5 to 20% by weight. Unlike ordinary polycarbonate resins, the polycarbonate resin used in the present invention has an advantage that it shows high solubility also in non-halogenated solvents, e.g., toluene, and its solutions are highly stable.

As described above, the polycarbonate resin solution of the present invention can diminish the safety and hygienic problems associated with conventional cast-film processes, because the solution of the present invention for use in film formation by casting can be a solution in a non-halogenated solvent due to the specific polycarbonate resin used therein which has high solubility in non-halogenated solvents. Further, since the polycarbonate resin solution shows excellent stability in the solution state, use of the solution in film formation by casting brings about improved film production efficiency. Moreover, the films obtained from the solution of the present invention have advantages that they have excellent strength and resistance to stress cracking and that they also have excellent abrasion resistance due to their high surface hardness and good slip properties.

The present invention will be explained below in more detail by reference to the following examples, but the invention is not construed as being limited thereto.

### EXAMPLE 1

In 42 liters of water was dissolved 3.7 kg of sodium hydroxide. While the temperature of this solution was kept at 20°C, 2.92 kg of bisphenol A (BPA), 3.88 kg of 4,4'-dihydroxydiphenyl ether (DHPE), 38.0 g of a dihydric phenol of formula (6) in which the repeating unit was Si(CH₃)₂O and n was 40, and R⁹ was -CH₂CH₂CH₂- bonded at the ortho position, and 8 g of hydrosulfite (HD) were dissolved therein. To the resulting solution was added 28 liters of methylene chloride (MC), followed by additon of 148 g of p-t-butylphenol (PTBP) with stirring. Subsequently, 3.5 kg of phosgene (PG) was blown into the mixture over a period of 60 minutes. After completion of the phosgene blowing, the reaction mixture was vigorously stirred to emulsify it, and 8 g of triethylamine (TEA) was then added thereto. The resulting mixture was stirred for about 1 hour to proceed polymerization.

After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form. Properties of this polycarbonate resin were evaluated, and the results obtained are shown in Table 1.

### COMPARATIVE EXAMPLE 1

A polycarbonate resin was obtained and evaluated in the same manner as in Example 1 except that 7.3 kg of BPA was used in place of 2.92 kg of BPA, 3.88 kg of DHPE, and 38.0 g of the compound of formula (6). The results obtained are shown in Table 1.

### EXAMPLES 2 TO 5 AND COMPARATIVE EXAMPLES 2 AND 3

Polycarbonate resins, the compositions of which are shown in Table 1, were obtained in the same manner as in Example 1 except that the kinds and amounts of the dihydric phenols of formulae (4) to (6) were changed. The dihydric phenols of formula (6) used in Examples 2 to 5 and Comparative Example 3 were as follows.

### Example 2:

Repeating unit; Si(CH₃)₂O, n=80
R⁹; -CH₂CH₂CH₂- bonded at ortho position

### Example 3:

Repeating unit; Si(Ph)(CH₃)O, n=30
R⁹; -CH₂CH₂CH₂- bonded at ortho position

### Example 4:

Repeating unit; Si(CH₃)₂O, n=40
R⁹; -CH₂CH₂CH₂- bonded at ortho position

### Example 5:

Repeating unit; Si(CH₃)₂O, n=40
R⁹; -CH₂CH₂- bonded at para position

### Comparative Example 3:

Repeating unit; Si(CH₃)₂O, n=40
R⁹; -CH₂CH₂CH₂- bonded at ortho position

Properties of the thus-obtained polycarbonate resins were evaluated, and the results obtained are shown in Table 1.

### EXAMPLE 6

In 42 liters of water was dissolved 3.7 kg of sodium hydroxide. While the temperature of this solution was kept at 20°C, 3.65 kg of bisphenol A (BPA), 3.49 kg of bis(4-hydroxyphenyl)sulfide (=4,4'-dihydroxydiphenyl sulfide; TDP), 40.1 g of a dihydric phenol of formula (6) in which the repeating unit was Si(CH₃)₂O and n was 60, and R⁹ was -CH₂CH₂CH₂- bonded at the ortho position, and 8 g of hydrosulfite (HD) were dissolved therein.

To the resulting solution was added 28 liters of methylene chloride (MC), followed by addition of 148 g of p-t-butylphenol (PTBP) with stirring. Subsequently, 3.5 kg of phosgene (PG) was blown into the mixture over a period of 60 minutes. After completion of the phosgene blowing, the reaction mixture was vigorously stirred to emulsify it, and 8 g of triethylamine (TEA) was then added thereto. The resulting mixture was stirred for about 1 hour to proceed polymerization.

After the polymerization, the reaction mixture was separated into an aqueous phase and an organic phase. The organic phase was neutralized with phosphoric acid and then washed repeatedly with water until the washing became neutral in pH. Thereafter, 35 liters of isopropanol was added to the resulting organic phase to precipitate a polymer. The precipitate was filtered off and then dried, thereby obtaining a polycarbonate resin in white powder form. Properties of this polycarbonate resin were evaluated, and the results obtained are shown in Table 2.

### EXAMPLES 7 TO 10 AND COMPARATIVE EXAMPLES 4 AND 5

Polycarbonate resins, the compositions of which are shown in Table 2, were obtained in the same manner as in Example 6 except that the kinds and amounts of the dihydric phenols of formulae (4) to (6) were changed. The dihydric phenols of formula (6) used in Examples 7 to 10 and Comparative Example 5 were as follows.

### Example 7:

Repeating unit; Si(CH₃)₂O, n=20
R⁹; -CH₂CH₂CH₂- bonded at ortho position

### Example 8:

Repeating unit; Si(Ph)(CH₃)O, n=50
R⁹; -CH₂CH₂CH₂- bonded at ortho position.

### Example 9:

Repeating unit; Si(CH₃)₂O, n=90
R⁹; -CH₂CH₂CH₂- bonded at ortho position

### Example 10:

Repeating unit; Si(CH₃)₂O, n=60
R⁹; -CH₂CH₂- bonded at para position

### Comparative Example 4:

Repeating unit; Si(CH₃)₂O, n=60
R⁹; -CH₂CH₂CH₂- bonded at ortho position

Properties of the thus-obtained polycarbonate resins were evaluated, and the results obtained are shown in Table 2.

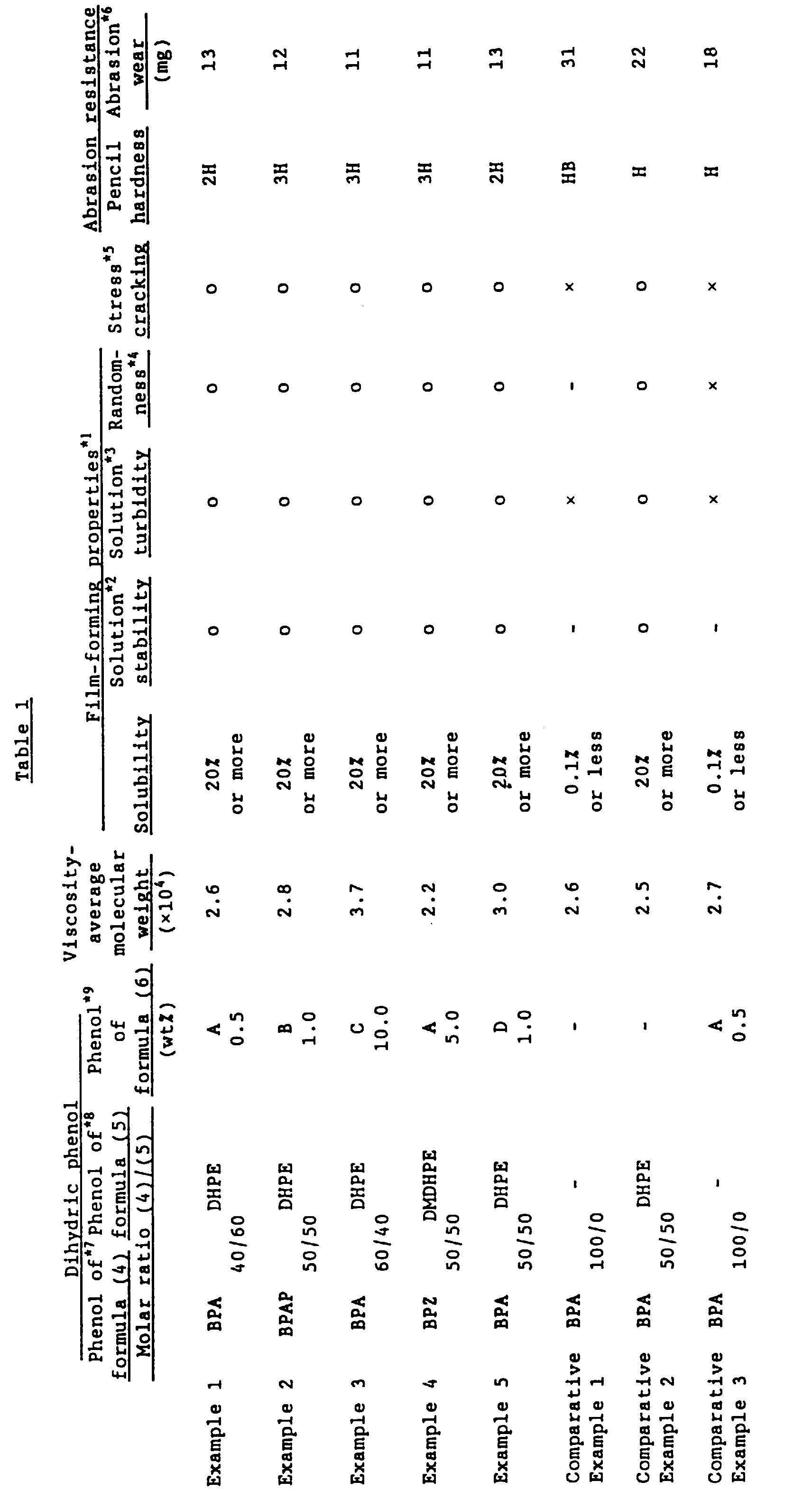

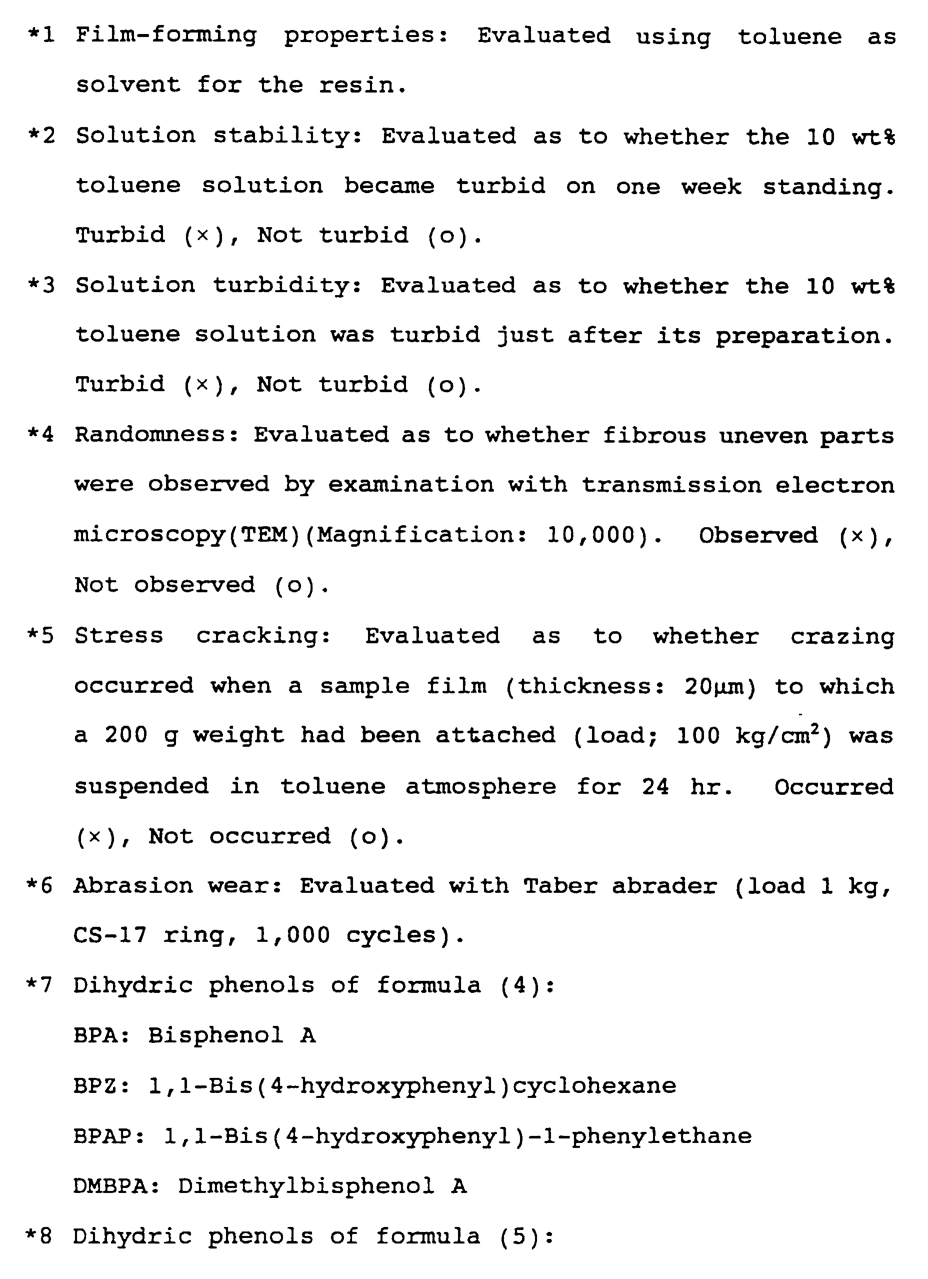

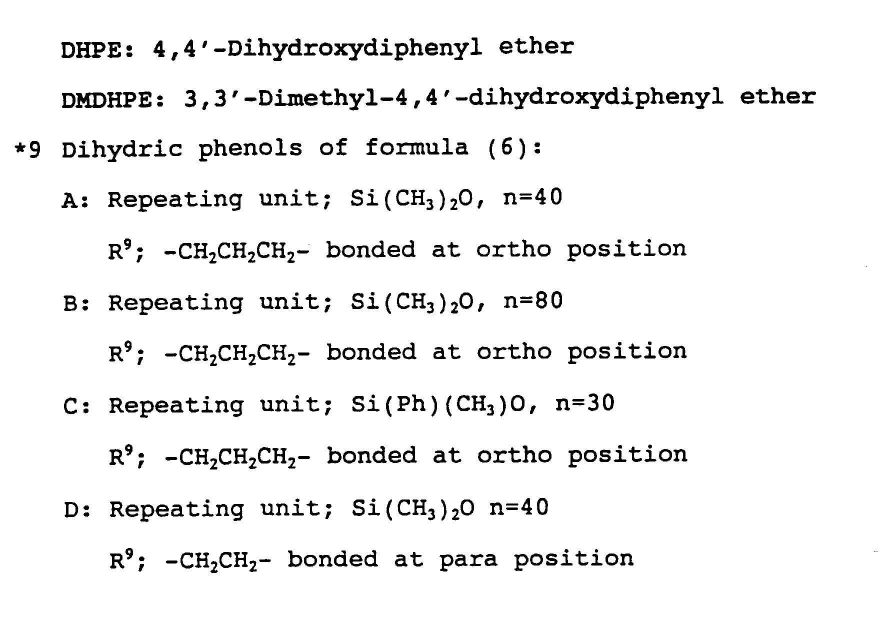

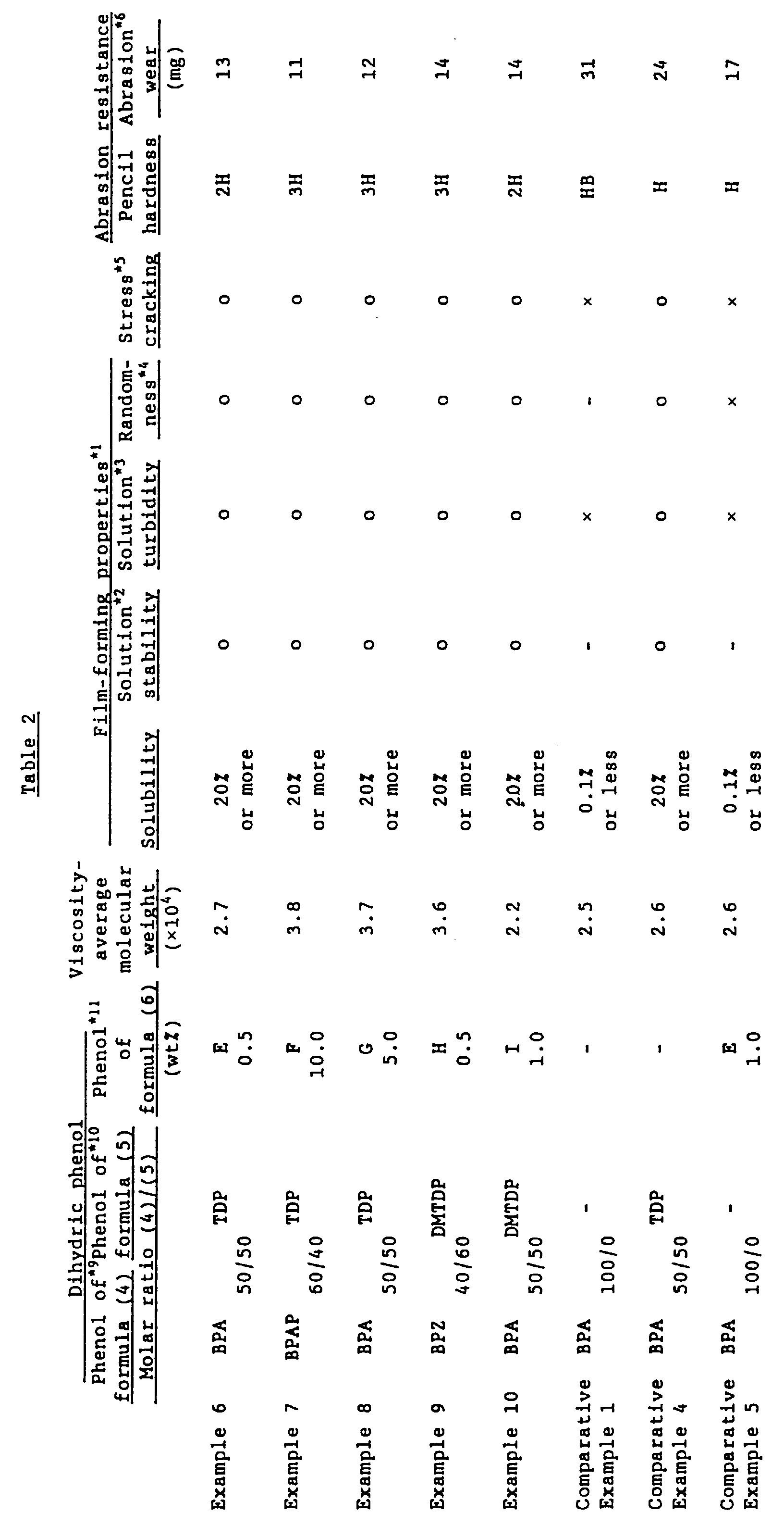

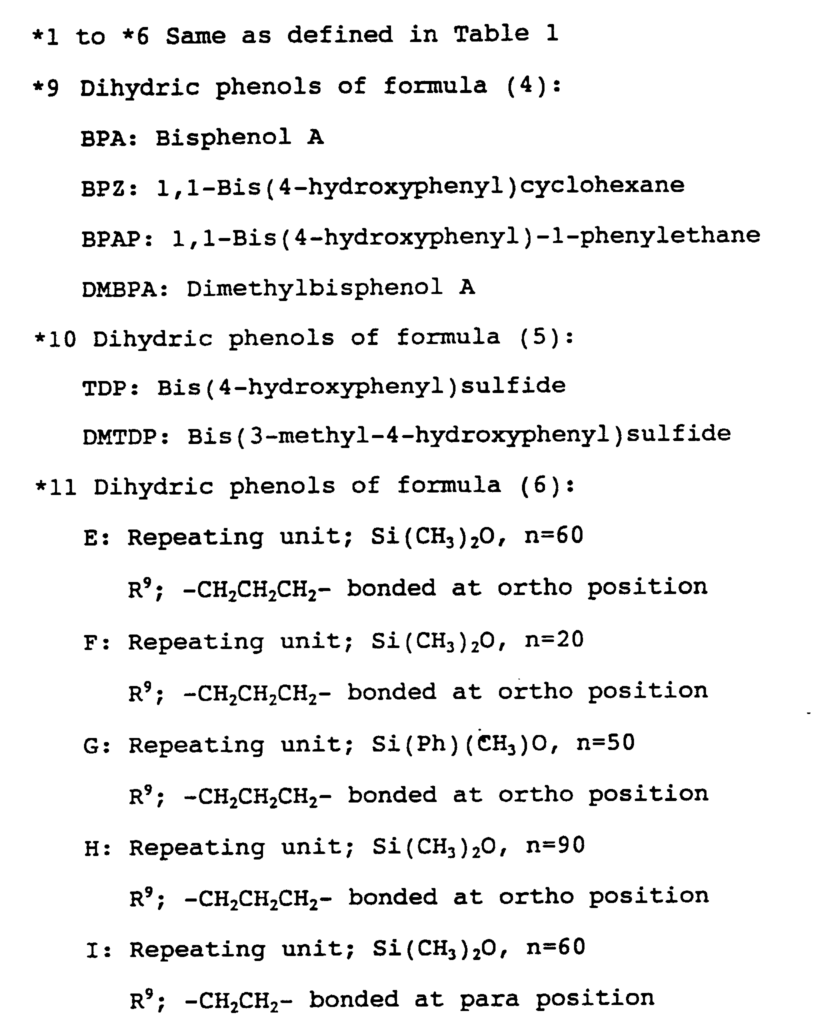

While the invention has been described in detail and with reference to specific embodiments thereof, it will be apparent to one skilled in the art that various changes and modifications can be made therein without departing from the spirit and scope thereof.

## Claims

1. A polycarbonate resin solution for use in film formation by casting which comprises an organic solvent and dissolved therein a random copolycarbonate resin having a structural unit represented by the following formula (1), a structural unit represented by the following formula (2), and a structural unit represented by the following formula (3), with the molar ratio of the amount of the structural unit of formula (1) to that of the structural unit of formula (2) being from 35/65 to 65/35 and the content of the structural unit of formula (3) being from 0.1 to 50 % by weight based on the total amount of all the units derived from dihydric phenols, and having a viscosity-average molecular weight of from 15,000 to 100,000: 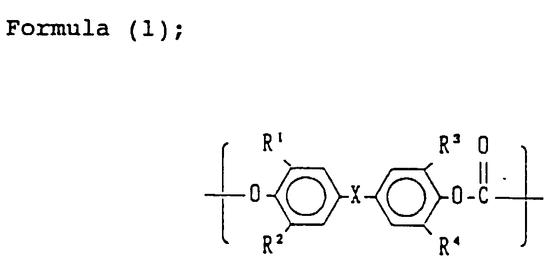 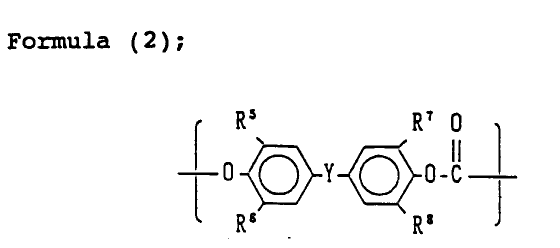 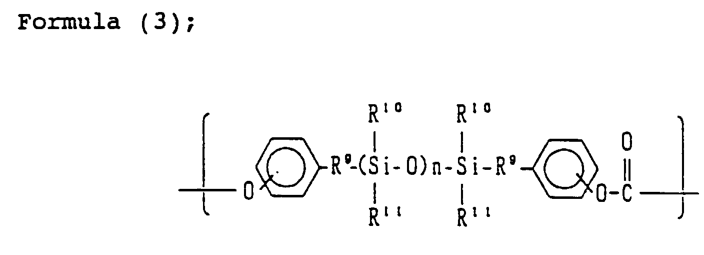 wherein in formulae (1) and (2), R¹ to R⁸ each represents hydrogen atom, a halogen atom, or an alkyl group having from 1 to 4 carbon atoms, X represents a straight-chain, branched, or cyclic alkylidene group having from 1 to 10 carbon atoms, an aryl-substituted alkylidene group, an arylene group, or sulfonyl group, and Y represents oxygen atom or sulfur atom; and in formula (3), R⁹ represents an alkylene or alkylidene group having from 2 to 6 carbon atoms, R¹⁰ and R¹¹ each represents an alkyl group having from 1 to 3 carbon atoms, phenyl group, or a substituted phenyl group, and n is an integer of from 1 to 200.

2. A solution as claimed in claim 1, wherein said organic solvent is a non-halogenated solvent.

3. A solution as claimed in claim 1, which has a polycarbonate resin concentration of from 1 to 30% by weight.

4. A solution as claimed in claim 1, wherein said structural unit represented by formula (1) is derived from a dihydric phenol selected from the group consisting of bisphenol A, 1,1-bis(4-hydroxyphenyl)cyclohexane, α,α-bis(4-hydroxyphenyl)ethylbenzene, 2,2-bis(3-methyl-4-hydroxyphenyl)propane, and bis(4-hydroxyphenyl) sulfone.

5. A solution as claimed in claim 1, wherein said structural unit represented by formula (2) is derived from bis(4-hydroxyphenyl) ether or bis(3-methyl-4-hydroxyphenyl) ether.

6. A solution as claimed in claim 1, wherein said structural unit represented by formula (2) is derived from bis(4-hydroxyphenyl) sulfide or bis (3-methyl-4-hydroxyphenyl)sulfide.

7. A solution as claimed in claim 1, wherein the viscosity-average molecular weight of said random copolycarbonate resin is from 20,000 to 40,000.

8. A process for producing a polycarbonate resin solution suitable for use in film formation by casting, which comprises copolymerizing a dihydric phenol represented by the following formula (4), a dihydric phenol represented by the following formula (5), and a dihydric phenol represented by the following formula (6), with the molar ratio of the amount of the dihydric phenol of formula (4) to that of the dihydric phenol of formula (5) being from 35/65 to 65/35 and the amount of the dihydric phenol of formula (6) being from 0.1 to 50% by weight based on the total amount of all the dihydric phenols, thereby to produce a random copolycarbonate resin having a viscosity-average molecular weight of from 15,000 to 100,000: 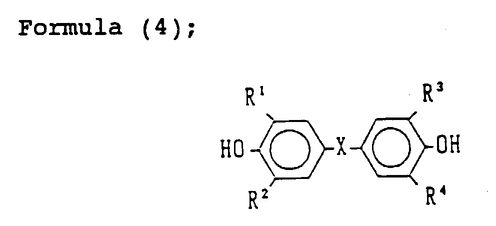 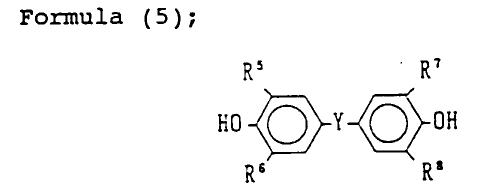 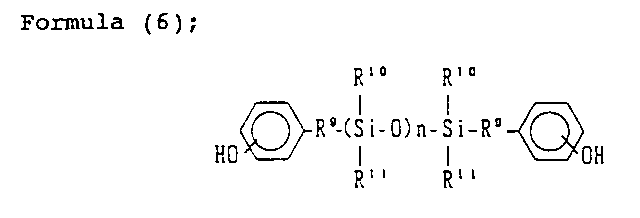 wherein in formulae (4) and (5), R¹ to R⁸ each represents hydrogen atom, a halogen atom, or an alkyl group having from 1 to 4 carbon atoms, X represents a straight-chain, branched, or cyclic alkylidene group having from 1 to 10 carbon atoms, an aryl-substituted alkylidene group, an arylene group, or sulfonyl group, and Y represents oxygen atom or sulfur atom; and in formula (6), R⁹ represents an alkylene or alkylidene group having from 2 to 6 carbon atoms, R¹⁰ and R¹¹ each represents an alkyl group having from 1 to 3 carbon atoms, phenyl group, or a substituted phenyl group, and n is an integer of from 1 to 200.

## Patentansprüche

1. Polycarbonatharzlösung zur Verwendung bei der Filmbildung durch Gießen, umfassend ein organisches Lösungsmittel und darin aufgelöst ein statistisches Copolycarbonatharz mit einer strukturellen Einheit, dargestellt durch die folgende Formel (1), einer strukturellen Einheit, dargestellt durch die folgende Formel (2), und einer strukturellen Einheit, dargestellt durch die folgende Formel (3), wobei das molare Verhältnis der Menge der strukturellen Einheit der Formel (1) zu der der strukturellen Einheit der Formel (2) von 35/65 bis 65/35 ist und der Gehalt der strukturellen Einheit der Formel (3) von 0,1 bis 50 Gew.-% ist, bezogen auf die Gesamtmenge aller Einheiten, die sich von zweiwertigen Phenolen ableiten, und mit einem Molekulargewicht im Viskositätsmittel von 15 000 bis 100 000: 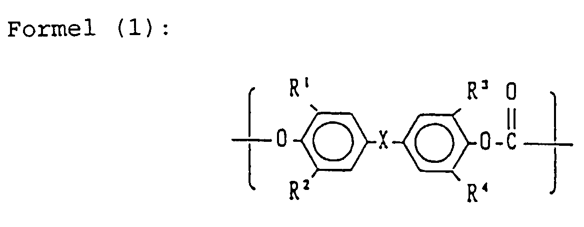 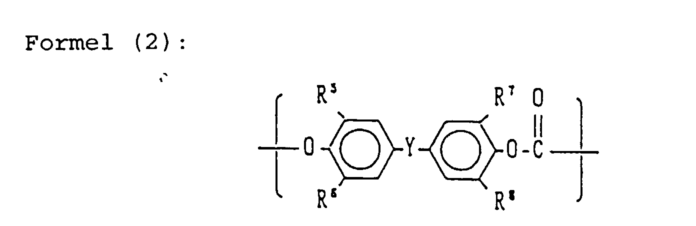 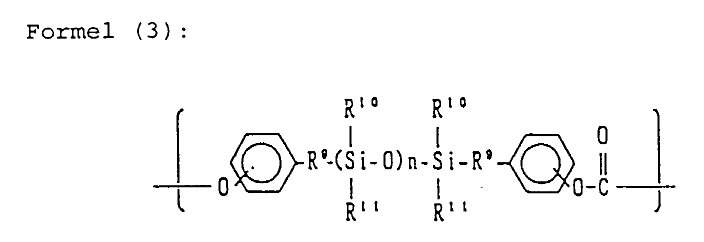 worin in den Formeln (1) und (2) R¹ bis R⁸ jeweils ein Wasserstoffatom, ein Halogenatom oder eine Alkyl-Gruppe mit 1 bis 4 Kohlenstoffatomen, X eine geradkettige, verzweigte oder cyclische Alkyliden-Gruppe mit 1 bis 10 Kohlenstoffatomen, eine Aryl-substituierte Alkyliden-Gruppe, eine Arylen-Gruppe oder Sulfonyl-Gruppe und Y ein Sauerstoff- oder Schwefelatom bedeuten; und in der Formel (3) R⁹ eine Alkylen- oder Alkyliden-Gruppe mit 2 bis 6 Kohlenstoffatomen, R¹⁰ und R¹¹ jeweils eine Alkyl-Gruppe mit 1 bis 3 Kohlenstoffatomen, Phenyl-Gruppe oder eine substituierte Phenyl-Gruppe sind und n eine ganze Zahl von 1 bis 200 ist.

2. Lösung nach Anspruch 1, worin das organische Lösungsmittel ein nicht-halogeniertes Lösungsmittel ist.

3. Lösung nach Anspruch 1, die eine Polycarbonatharz-Konzentration von 1 bis 30 Gew.-% hat.

4. Lösung nach Anspruch 1, worin die strukturelle Einheit, dargestellt durch die Formel (1), sich von einem zweiwertigen Phenol ableitet, ausgewählt aus der Gruppe, bestehende aus Bisphenol A, 1,1-Bis(4-hydroxyphenyl)cyclohexan, α,α-Bis(4-hydroxyphenyl)ethylbenzol, 2,2-Bis(3-methyl-4hydroxyphenyl)propan und Bis(4-hydroxyphenyl)sulfon.

5. Lösung nach Anspruch 1, worin die strukturelle Einheit, dargestellt durch die Formel (2), sich von Bis(4-hydroxyphenyl)ether oder Bis(3-methyl-4hydroxyphenyl)ether ableitet.

6. Lösung nach Anspruch 1, worin die strukturelle Einheit, dargestellt durch die Formel (2), sich von Bis(4-hydroxyphenyl) sulfid oder Bis(3-methyl-4-hydroxyphenyl) sulfid ableitet.

7. Lösung nach Anspruch 1, worin das Molekulargewicht im Viskositätsmittel des statistischen Copolycarbonatharzes von 20 000 bis 40 000 ist.

8. Verfahren zur Erzeugung einer Polycarbonatharzlösung, geeignet zur Verwendung bei der Filmbildung durch Gießen, umfassend die Copolymerisation eines zweiwertigen Pehnols, dargestellt durch die folgende Formel (4), eines zweiwertigen Phenols, dargestellt durch die folgende Formel (5), und eines zweiwertigen Phenols, dargestellt durch die folgende Formel (6), wobei das molare Verhältnis der Menge des zweiwertigen Phenols der Formel (4) zu der des zweiwertigen Phenols der Formel (5) von 35/65 bis 65/35 und die Menge des zweiwertigen Phenols der Formel (6) von 0,1 bis 50 Gew.-% ist, bezogen auf die Gesamtmenge der gesamten zweiwertigen Phenole, unter Erzeugung eines statistischen Copolycarbonatharzes mit einem Molekulargewicht im Viskositätsmittel von 15 000 bis 100 000: 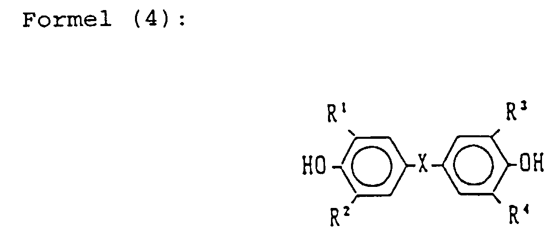 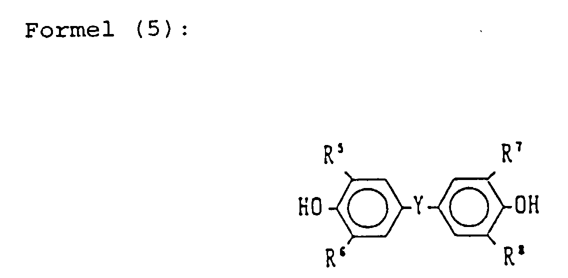 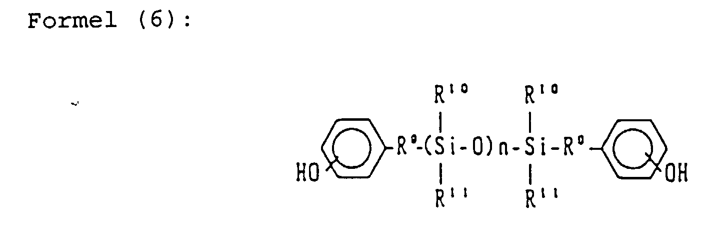 worin in den Formeln (4) und (5) R¹ bis R⁸ jeweils ein Wasserstoffatom, ein Halogenatom oder eine Alkyl-Gruppe mit 1 bis 4 Kohlenstoffatomen, X eine geradkettige, verzweigte oder cyclische Alkyliden-Gruppe mit 1 bis 10 Kohlenstoffatomen, eine Aryl-substituierte Alkyliden-Gruppe, eine Arylen-Gruppe oder Sulfonyl-Gruppe und Y ein Sauerstoff- oder ein Schwefelatom sind; und in der Formel (6) R⁹ eine Alkylen- oder Alkyliden-Gruppe mit 2 bis 6 Kohlenstoffatomen, R¹⁰ und R¹¹ jeweils eine Alkyl-Gruppe mit 1 bis 3 Kohlenstoffatomen, Phenyl-Gruppe oder eine substituierte Phenyl-Gruppe sind und n eine ganze Zahl von 1 bis 200 ist.

## Revendications

1. Solution de résine de polycarbonate destinée à être utilisée dans la formation de films par coulée qui comprend un solvant organique et, dissoute dans celui-ci, une résine de copolycarbonate statistique ayant une unité structurale représentée par la formule (1) suivante, une unité structurale représentée par la formule (2) suivante et une unité structurale représentée par la formule (3) suivante, le rapport molaire de la quantité de l'unité structurale de formule (1) à celle de l'unité structurale de formule (2) étant de 35/65 à 65/35 et la teneur de l'unité structurale de formule (3) étant de 0,1 à 50 % en masse par rapport à la quantité totale de toutes les unités dérivées de diphénols, et ayant une masse moléculaire moyenne déterminée par viscosimétrie de 15 000 à 100 000 : 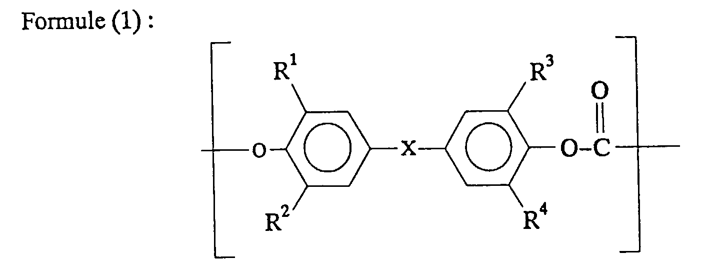 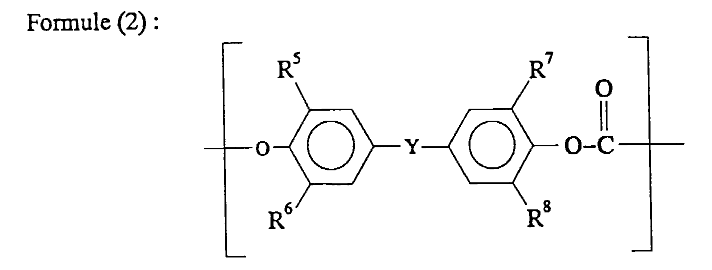 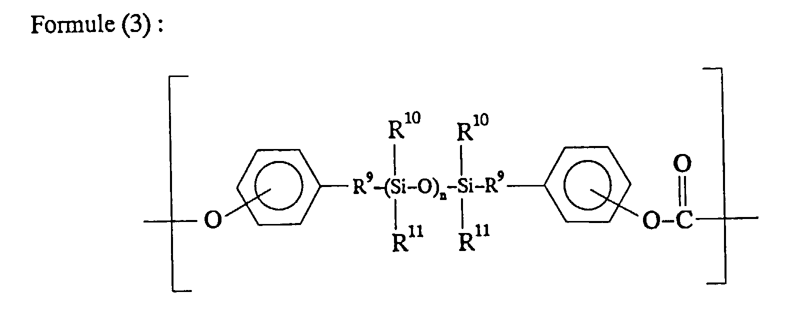 où, dans les formules (1) et (2), R¹ à R⁸ représentent chacun un atome d'hydrogène, un atome d'halogène ou un groupe alkyle ayant de 1 à 4 atomes de carbone, X représente un groupe alkylidène linéaire, ramifié ou cyclique ayant de 1 à 10 atomes de carbone, un groupe alkylidène aryl-substitué, un groupe arylène ou un groupe sulfonyle, et Y représente un atome d'oxygène ou un atome de soufre ; et dans la formule (3), R⁹ représente un groupe alkylène ou alkylidène ayant de 2 à 6 atomes de carbone, R¹⁰ et R¹¹ représentent chacun un groupe alkyle ayant de 1 à 3 atomes de carbone, un groupe phényle ou un groupe phényle substitué, et n est un entier de 1 à 200.

2. Solution selon la revendication 1, dans laquelle ledit solvant organique est un solvant non halogéné.

3. Solution selon la revendication 1, qui a une concentration en résine de polycarbonate de 1 à 30 % en masse.

4. Solution selon la revendication 1, dans laquelle ladite unité structurale représentée par la formule (1) est dérivée d'un diphénol choisi dans le groupe consistant en le bisphénol A, le 1,1-bis(4-hydroxyphényl)cyclohexane, l'α,α-bis(4-hydroxyphényl)éthylbenzène, le 2,2-bis(3-méthyl-4-hydroxyphényl)propane et la bis(4-hydroxyphényl)sulfone.

5. Solution selon la revendication 1, dans laquelle ladite unité structurale représentée par la formule (2) est dérivée d'oxyde de bis(4-hydroxyphényle) ou d'oxyde de bis(3-méthyl-4-hydroxyphényle).

6. Solution selon la revendication 1, dans laquelle ladite unité structurale représentée par la formule (2) est dérivée de sulfure de bis(4-hydroxyphényle) ou de sulfure de bis(3-méthyl-4-hydroxyphényle).

7. Solution selon la revendication 1, dans laquelle la masse moléculaire moyenne déterminée par viscosimétrie de ladite résine de copolycarbonate statistique est de 20 000 à 40 000.

8. Procédé de production d'une solution de résine de polycarbonate qui convient pour être utilisée dans la formation de films par coulée, qui comprend la copolymérisation d'un diphénol représenté par la formule (4) suivante, d'un diphénol représenté par la formule (5) suivante et d'un diphénol représenté par la formule (6) suivante, le rapport molaire de la quantité de diphénol de formule (4) à celle de diphénol de formule (5) étant de 35/65 à 65/35 et la quantité de diphénol de formule (6) étant de 0,1 à 50 % en masse par rapport à la quantité totale de tous les diphénols, pour produire une résine de copolycarbonate statistique ayant une masse moléculaire moyenne déterminée par viscosimétrie de 15 000 à 100 000 : 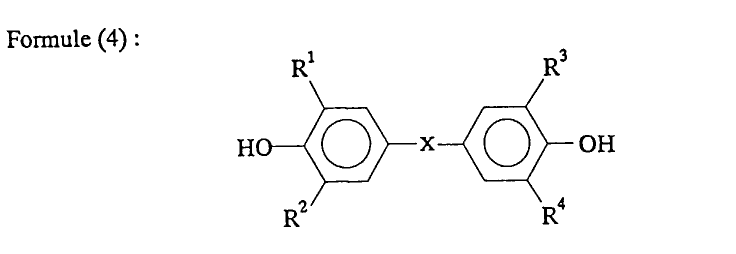 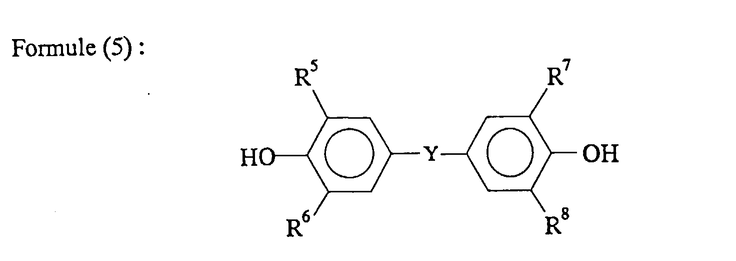 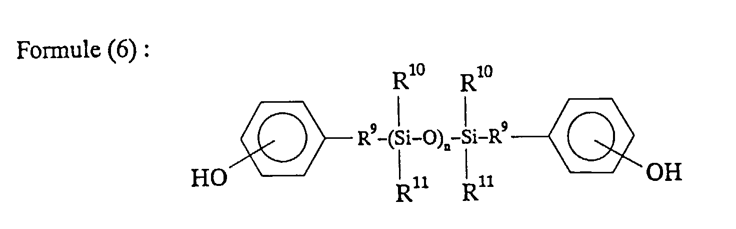 où, dans les formules (4) et (5), R¹ à R⁸ représentent chacun un atome d'hydrogène, un atome d'halogène ou un groupe alkyle ayant de 1 à 4 atomes de carbone, X représente un groupe alkylidène linéaire, ramifié ou cyclique ayant de 1 à 10 atomes de carbone, un groupe alkylidène aryl-substitué, un groupe arylène ou un groupe sulfonyle, et Y représente un atome d'oxygène ou un atome de soufre ; et dans la formule (6), R⁹ représente un groupe alkylène ou alkylidène ayant de 2 à 6 atomes de carbone, R¹⁰ et R¹¹ représentent chacun un groupe alkyle ayant de 1 à 3 atomes de carbone, un groupe phényle ou un groupe phényle substitué, et n est un entier de 1 à 200.
